# EUROPEAN PATENT SPECIFICATION

(11) **EP 3 232 495 B1**
(45) Date of publication and mention of the grant of the patent: **16.03.2022**
(21) Application number: 15867813.6
(22) Date of filing: 11.12.2015
(51) Int. Cl.: H01G 11/76, H01G 11/72, H01G 11/82, H01M 50/531, H01M 50/543

(54) **POWER STORAGE ELEMENT**
STROMSPEICHERELEMENT
ÉLÉMENT DE STOCKAGE D'ÉNERGIE

(30) Priority: 11.12.2014 JP 2014250606
(43) Date of publication of application: 18.10.2017
(60) Divisional application: 22155819.0
(73) Proprietor: GS Yuasa International Ltd., Kyoto-shi, Kyoto 601-8520 (JP)
(72) Inventor: KAWATE, Kenji, Kyoto-shi Kyoto 601-8520 (JP)
(74) Representative: Isarpatent
(86) International application number: PCT/JP2015/084758
(87) International publication number: WO 2016/093338

(56) References cited:
- WO-A1-2014/041987
- JP-A- 2002 246 009
- JP-A- 2005 005 215
- JP-A- 2011 070 918
- JP-A- 2011 070 918
- JP-A- 2013 161 757
- JP-A- 2013 161 757
- JP-A- 2015 130 251
- US-A1- 2011 151 295
- None

## Description

### TECHNICAL FIELD

The present disclosure relates to an energy storage device including a non-electrolyte secondary battery such as a lithium ion secondary battery.

JP 2011 070 918 A discloses an energy storage device comprising:
an electrode assembly having a current collecting tab which projects from a first portion of the electrode assembly, the electrode assembly being housed in a case;
an external terminal disposed on the case; and a current collector disposed between he first portion an the case, electrically connected to the external terminal, and electrically connected to the current collecting tab, wherein the current collector is having a first surface opposed to the case and a second surface opposed to the first portion of the electrode assembly, wherein the current collecting tab is in direct contact with the second surface of the current collector.

### BACKGROUND ART

Patent document 1 discloses an energy storage device which includes an electrode assembly formed by winding a positive electrode sheet, a negative electrode sheet and a separator in an elongated circular shape as viewed in a plan view in a state where the separator is interposed between the positive electrode sheet and the negative electrode sheet. Out of a pair of opposedly facing straight line portions of the electrode assembly, a positive electrode current collecting tab and a negative electrode current collecting tab are formed on the first straight line portion on one side in a spaced-apart manner. A spacer is disposed above the current collecting tabs, and the current collecting tabs are electrically connected to current collectors above the spacer.

The energy storage device disclosed in patent document 1 requires a large space for arranging the current collectors above the first straight line portion on which the current collecting tabs of the electrode assembly are formed in a projecting manner. Patent document 2 relates to a positive electrode lead of a secondary battery being attached to a positive electrode collector by bending the positive electrode collectors and bundling those. Accordingly, in the case where energy storage devices having the same height are manufactured, it is necessary to form the electrode assembly in a small compact shape and hence, a capacity of the energy storage device becomes small.

### PRIOR ART DOCUMENT

### PATENT DOCUMENT

Patent Document 1: JP-A-2011-70918
Patent Document 2: JP-A-2013-161757

### SUMMARY

### PROBLEMS TO BE SOLVED BY THE DISCLOSURE

It is an object of the present disclosure to provide a technique which allows an energy storage device to have large capacity.

### MEANS FOR SOLVING THE PROBLEMS

The invention is defined by the appended claims. The present disclosure also provides an energy storage device which includes: an electrode assembly having a positive electrode sheet and a negative electrode sheet stacked alternately with a separator interposed therebetween, and a positive electrode current collecting tab and a negative electrode current collecting tab formed of projecting portions which project from a first portion on one side in a stacking direction of the respective electrode sheets, the electrode assembly being housed in a case; a positive electrode external terminal and a negative electrode external terminal disposed on the case; and a positive electrode current collector and a negative electrode current collector disposed between the electrode assembly and the case, electrically connected to the respective external terminals, and electrically connected to the respective current collecting tabs on the other side in the stacking direction of the respective electrode sheets, the other side being a second portion side of the respective electrode sheets.

In the energy storage device of the present disclosure, the current collecting tabs project from the first portion side of the electrode assembly, and connecting portions between the current collecting tabs and the current collectors are positioned on the second portion side where the current collecting tabs do not project. With such a configuration, a height of the current correcting tab at the end portion of the electrode assembly can be lowered and hence, a distance between the electrode assembly and a case can be decreased. Accordingly, when the energy storage devices having the same height are manufactured, the electrode assembly can be formed with a large size and hence, the energy storage device can acquire a large capacity.

### ADVANTAGES OF THE INVENTION

According to an energy storage device of the present invention, by lowering a height of an end portion of an electrode assembly, a capacity of the energy storage can be increased.

### BRIEF DESCRIPTION OF THE DRAWINGS

Fig. 1 is a longitudinal cross-sectional view of a non-electrolyte secondary battery according to a first embodiment of the present disclosure.
Fig. 2 is an exploded perspective view of the non-electrolyte secondary battery shown in Fig. 1.
Fig. 3 is a perspective view of an electrode assembly.
Fig. 4 is a developed view of the electrode assembly.
Fig. 5 is an enlarged view of a portion V in Fig. 1
Fig. 6 is an enlarged view of a portion VI in Fig. 1.
Fig. 7 is a perspective view of the electrode assembly and a current collector.
Fig. 8 is a perspective view with a part broken away of the non-electrolyte secondary battery shown in Fig. 1.
Fig. 9 is an exploded side view with a part broken away of the non-electrolyte secondary battery shown in Fig. 1.
Fig. 10 is a partially transverse cross-sectional view of the non-electrolyte secondary battery shown in Fig. 1.
Fig. 11A is a cross-sectional view showing an assembling step of a current collecting tab.
Fig. 11B is a cross-sectional view showing a state where the current collecting tab is assembled.
Fig. 12 is a plan view of the electrode assembly and the current collector.
Fig. 13A is a perspective view of an upper spacer as viewed from above.
Fig. 13B is a perspective view of the upper spacer as viewed from below.
Fig. 14A is a cross-sectional view showing an assembling step of the electrode assembly and a lid.
Fig. 14B is a cross-sectional view showing another assembling step of the electrode assembly and the lid.
Fig. 15 is a partially transverse cross-sectional view of a non-electrolyte secondary battery according to a second embodiment.
Fig. 16 is a partially transverse cross-sectional view of a non-electrolyte secondary battery according to a third embodiment.
Fig. 17 is a plan view of an electrode assembly and a current collector according to the third embodiment.
Fig. 18 is a partially transverse cross-sectional view showing a modification of the non-electrolyte secondary battery.

### MODE FOR CARRYING OUT THE DISCLOSURE

Hereinafter, embodiments of the present disclosure are described with reference to attached drawings. In the following description, although terms (terms containing "upper", "lower", "side", and "end", for example) indicating specific directions or positions are used when necessary, these terms are merely used for facilitating understanding of the disclosure with reference to the drawings, and the technical scope of the present disclosure is not limited by meanings of these terms. Further, the description made hereinafter represents just an essential example of the present disclosure and is not intended to limit the present disclosure, applications of the present disclosure, and the usages of the present disclosure.

### (First Embodiment)

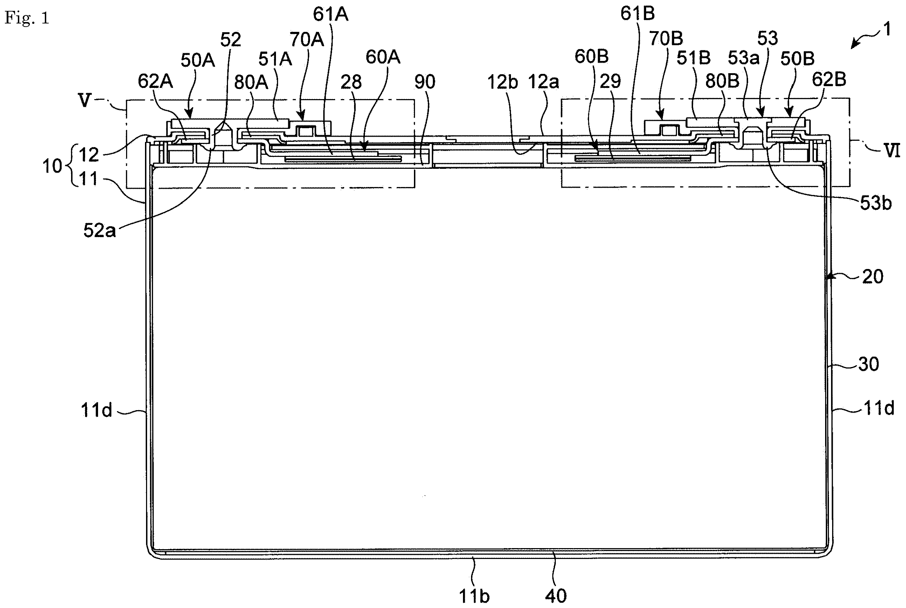

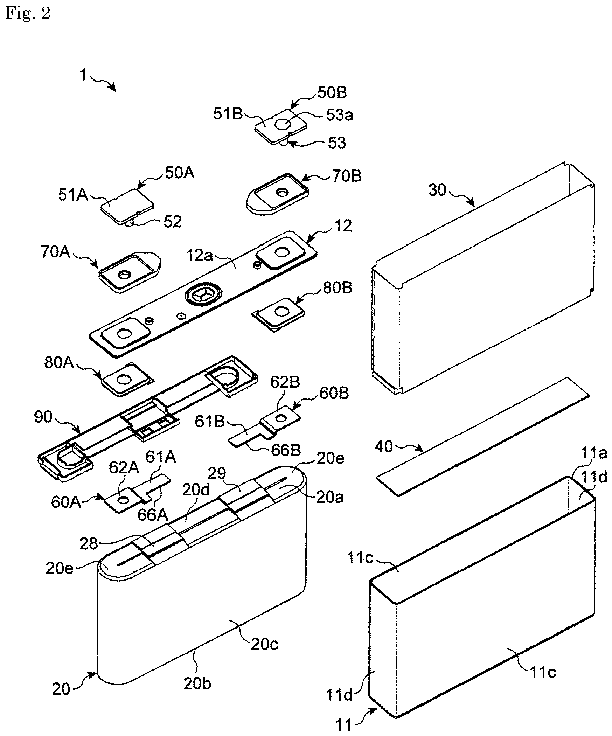

Fig. 1 and Fig. 2 show a lithium ion secondary battery (hereinafter simply referred to as a battery) 1 according to a first embodiment of the present disclosure.

### (Overall configuration)

With reference to Fig. 1 and Fig. 2, the battery 1 includes an outer case 10, an electrode assembly 20, an insulation sheet 30, a bottom spacer 40, an external terminal 50A for a positive electrode and an external terminal 50B for a negative electrode, positive and negative current collectors 60A, 60B, upper packings 70A, 70B, lower packings 80A, 80B, and an upper spacer 90.

The outer case (case) 10 includes a case body 11, and a lid 12 which closes an opening 11a of the case body 11. In this embodiment, the case body 11 and the lid 12 are made of aluminum or an aluminum alloy. The case body 11 has a rectangular plate-like bottom wall portion 11b, a pair of long-side wall portions 11c, 11c which is raised from long sides of the bottom wall portion 11b, and a pair of short-side wall portions 11d, 11d which is raised from short sides of the bottom wall portion 11b. The lid 12 has an approximately rectangular plate shape. Upper ends of the long-side wall portions 11c and upper ends of the short-side wall portions 11d define the opening 11a of the case body 11. The electrode assembly 20 is stored in the inside of the case body 11 which is filled with an electrolyte solution. The electrode assembly 20 is covered by the insulation sheet 30. The bottom spacer 40 is interposed between the electrode assembly 20 and the bottom wall portion 11b of the case body 11. The lower packings 80A, 80B and the upper spacer 90 are also stored in the inside of the case body 11.

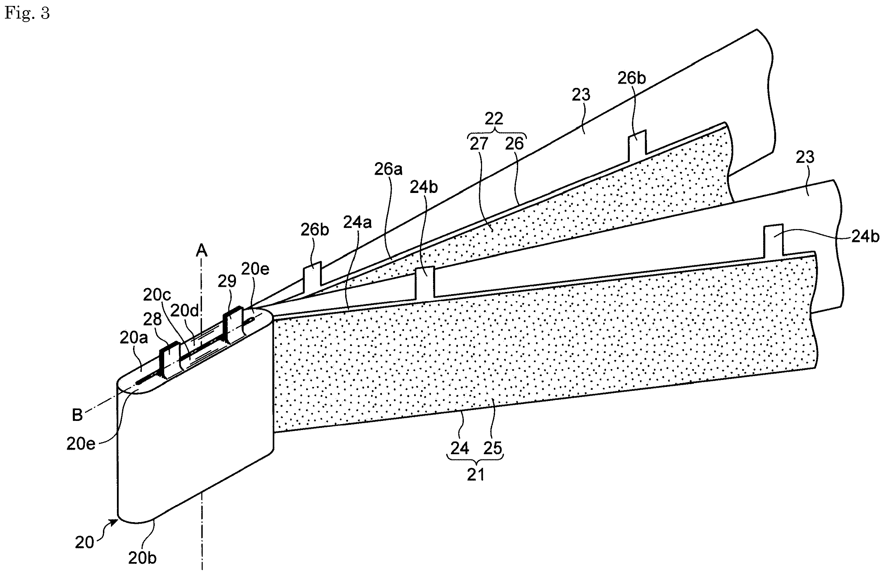

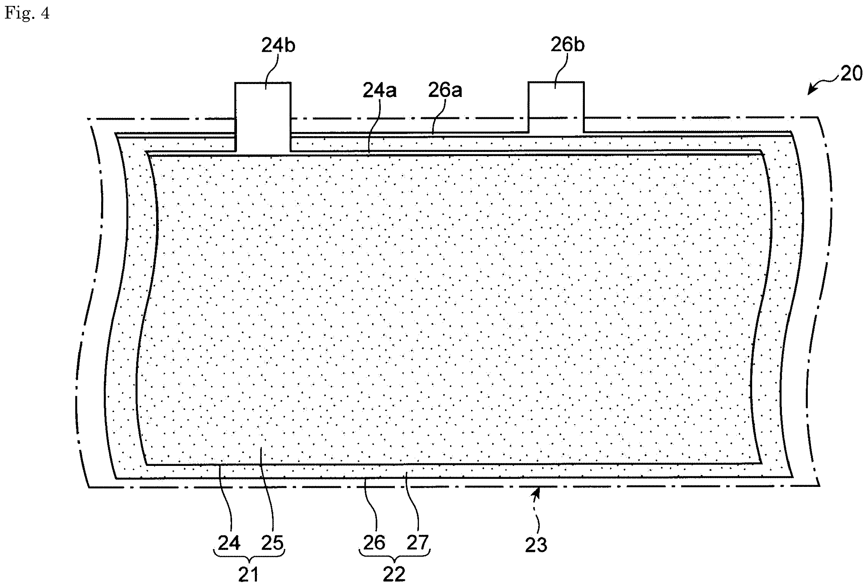

Also with reference to Fig. 3 and Fig. 4, the electrode assembly 20 is configured such that a positive electrode sheet 21, a negative electrode sheet 22, and two separators 23, 23 all of which have an elongated strip shape and a fixed width are made to overlap with each other, and are wound into an approximately elongated circular shape with a high flatness ratio. The separators 23, 23 are formed using a microporous resin sheet. Either one of two separators 23, 23 is interposed between one layer of the positive electrode sheet 21 and one layer of the negative electrode sheet 22 disposed adjacently to one layer of the positive electrode sheet 21. An axis of winding (winding axis) of the positive electrode sheet 21, the negative electrode sheet 22 and two separators 23, 23 is conceptually indicated by symbol A in Fig. 3. The electrode assembly 20 is stored in the inside of the case body 11 in a posture where the winding axis A extends substantially in a direction that the bottom wall portion 11b and the opening 11a of the case body 11 face each other in an opposed manner (in a vertical direction in Fig. 1).

As shown in Fig. 3, end portions 20a, 20b of the electrode assembly 20 as viewed in a direction that the winding axis A extends respectively have a pair of opposedly facing straight line portions 20c, 20d, and a pair of opposedly facing curved portions 20e, 20e so as to connect these straight line portions 20c, 20d to each other.

The positive electrode sheet 21 includes: a strip-shaped positive electrode metal foil 24; and positive active material layers 25 which are formed on both surfaces of the positive electrode metal foil 24 respectively. On one end portion of the positive electrode sheet 21 in a width direction of the positive electrode sheet 21 (on a lower side in Fig. 3 and Fig. 4), the positive active material layer 25 is formed so as to reach a side edge of the positive electrode metal foil 24. On the other end portion of the positive electrode sheet 21 in the width direction of the positive electrode sheet 21 (on an upper side in Fig. 3 and Fig. 4), the positive active material layer 25 is not formed, and a non-coated portion 24a is formed where the positive electrode metal foil 24 is exposed.

The negative electrode sheet 22 includes: a strip-shaped negative electrode metal foil 26; and negative active material layers 27 which are formed on both surfaces of the negative electrode metal foil 26 respectively. On one end portion of the negative electrode sheet 22 in a width direction of the negative electrode sheet 22 (on a lower side in Fig. 3 and Fig. 4), the negative active material layer 27 is formed so as to reach a side edge of the negative electrode metal foil 26. On the other end portion of the negative electrode sheet 22 in the width direction of the negative electrode sheet 22 (on an upper side in Fig. 3 and Fig. 4), the negative active material layer 27 is not formed, and a non-coated portion 26a is formed where the negative electrode metal foil 26 is exposed.

A plurality of projecting portions 24b which project outward in the width direction from the non-coated portion 24a are formed on the positive electrode metal foil 24 at intervals in the longitudinal direction. In a state where the positive electrode sheet 21, the negative electrode sheet 22, and the separators 23, 23 are made to overlap with each other and are wound together, the plurality of projecting portions 24b are made to overlap with each other thus forming a tab-shaped portion (positive electrode current collecting tab 28) which projects from the electrode assembly 20. A plurality of projecting portions 26 are formed also on the negative electrode metal foil 26 in the same manner as the projecting portions 24b of the positive electrode metal foil 24. By making the projecting portions 26b overlap with each other, a negative electrode current collecting tab 29 which projects from the electrode assembly 20 is formed.

With reference to Fig. 3, the positive electrode current collecting tab 28 and the negative electrode current collecting tab 29 project from one end portion 20a (an end portion on an upper side in Fig. 3) of the electrode assembly 20. When the end portion 20a of the electrode assembly 20 is viewed in a direction that the winding axis A extends, the positive electrode current collecting tab 28 and the negative electrode current collecting tab 29 project from the first straight line portion 20c which is one of the pair of straight line portions 20c, 20d (a viewer's side in Fig. 3) with respect to a center line B in the longitudinal direction.

The external terminal 50A for the positive electrode is disposed on one end side (a left side in Fig. 1) of the lid 12, and the external terminal 50B for the negative electrode is disposed on the other end side (right side in Fig. 1) of the lid 12. The external terminals 50A, 50B respectively have a plate-like portion 51A, 51B which is disposed on an outer surface (upper surface) 12a of the lid 12. A connecting member such as a bus bar is welded to the plate-like portions 51A, 51B respectively so that the external terminals 50A, 50B are connected to an external circuit.

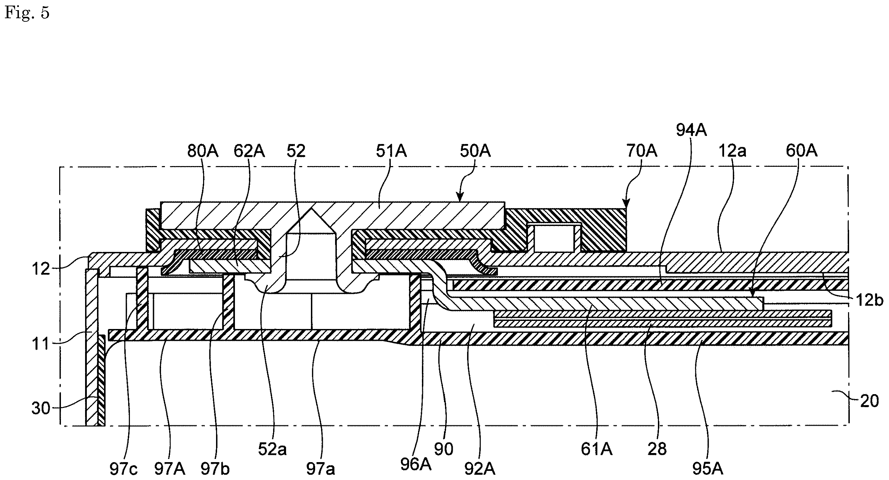

With reference to Fig. 5 in addition to Fig. 1 and Fig. 2, the external terminal 50A for the positive electrode includes: the plate-like portion 51A which is disposed on the outer surface 12a of the lid 12; and a circular cylindrical shaft portion 52 which projects downward from a lower surface of the plate-like portion 51A. The plate-like portion 51A and the shaft portion 52 are formed as an integral body. The shaft portion 52 penetrates the lid 12 and projects to the inside of the case body 11.

A large diameter portion 52a is formed on a lower end of the shaft portion 52 of the external terminal 50A for the positive electrode. With the formation of the large diameter portion 52a, the external terminal 50A for the positive electrode is fixed to the lid 12 by swaging. To be more specific, the external terminal 50A for the positive electrode and the current collector 60A are fixed to the lid 12 in such a manner that the insulating-resin-made upper packing 70A, the lid 12, the insulating-resin-made lower packing 80A, and the current collector 60A for the positive electrode (a swaged portion 62A described later) are sandwiched between the plate-like portion 51A and the large-diameter portion 52a of the external terminal 50A. The upper packing 70A is interposed between the outer surface 12a of the lid 12 and the external terminal 50A, and the lower packing 80A is interposed between an inner surface (lower surface) 12b of the lid 12 and the current collector 60A. In this embodiment, the external terminal 50A for the positive electrode and the current collector 60A are made of aluminum or an aluminum alloy.

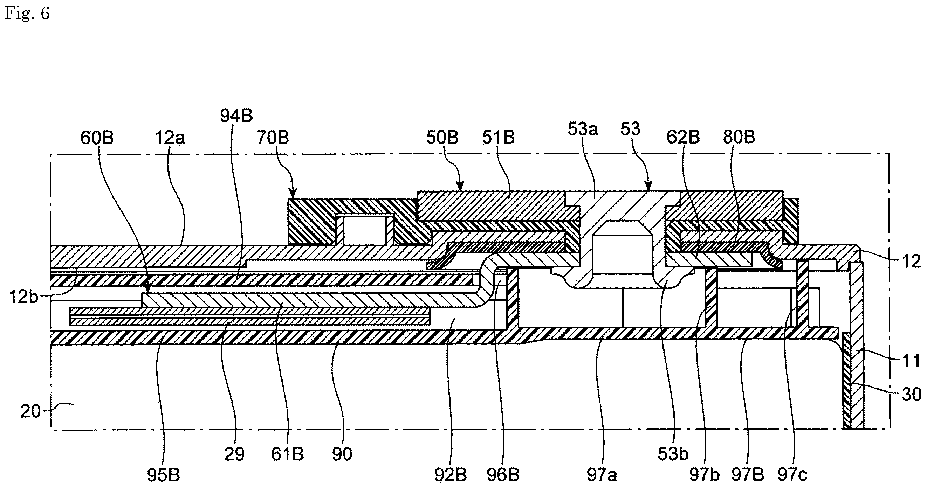

With reference to Fig. 6 in addition to Fig. 1 and Fig. 2, the external terminal 50B for the negative electrode includes the plate-like portion 51B which is disposed on the outer surface 12a of the lid 12, and a rivet 53 which is a member provided as a separate body from the plate-like portion 51B. A flange portion 53a formed on an upper end of the rivet 53 is press-fitted into a through hole formed in the plate-like portion 51B so that the rivet 53 is fixed to the plate-like portion 51B. The rivet 53 projects downward from a lower surface of the plate-like portion 51B, penetrates the lid 12, and projects to the inside of the case body 11.

An enlarged-diameter portion 53b is formed on a lower end of the rivet 53 of the external terminal 50B for the negative electrode. With the formation of the enlarged-diameter portion 53b, the external terminal 50B for the negative electrode is fixed to the lid 12 by swaging. To be more specific, the external terminal 50B for the negative electrode and the current collector 60B are fixed to the lid 12 in such a manner that the insulating-resin-made upper packing 70B, the lid 12, the insulating-resin-made upper packing 70B, and the current collector 60B for the negative electrode are sandwiched between the plate-like portion 51B and the enlarged-diameter portion 53b of the external terminal 50B. The lower packing 80B is interposed between the outer surface 12a of the lid 12 and the external terminal 50B, and the lower packing 80B is interposed between the inner surface 12b of the lid 12 and the current collector 60B of the negative electrode. In this embodiment, the plate-like portion 51B of the external terminal 50B for the negative electrode is made of aluminum or an aluminum alloy, the rivet 53 of the external terminal 50B for the negative electrode is made of copper or a copper alloy, and the current collector 60B for the negative electrode is made of copper or a copper alloy.

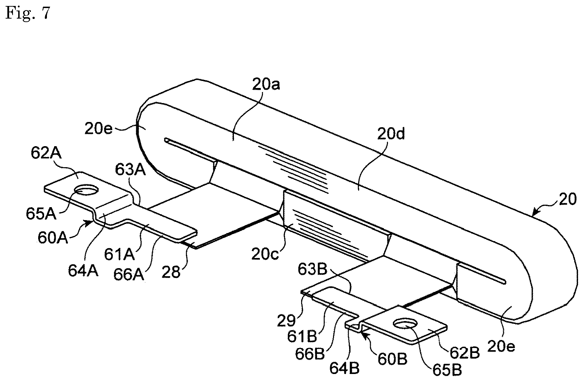

As shown most clearly in Fig. 7, the current collector 60A for the positive electrode includes: a welded portion 61A; and the swaged portion 62A. The welded portion 61A is welded to the positive electrode current collector tab 28 of the electrode assembly 20. That is, the welded portion 61A is electrically and mechanically connected to the positive electrode current collecting tab 28. As described above, the swaged portion 62A is fixed to the lid 12 by swaging by way of the enlarged diameter portion 52a formed on the shaft portion 52 of the external terminal 50A for the positive electrode. In the same manner, the current collector 60B for the negative electrode includes: a welded portion 61B; and a swaged portion 62B. The welded portion 61B is welded to the negative electrode current collecting tab 29 of the electrode assembly 20. That is, the welded portion 61B is electrically and mechanically connected to the negative electrode current collecting tab 29. As described above, the swaged portion 62B is fixed to the lid 12 by swaging by way of the enlarged diameter portion 53b formed on the rivet 53 of the external terminal 50B for the negative electrode.

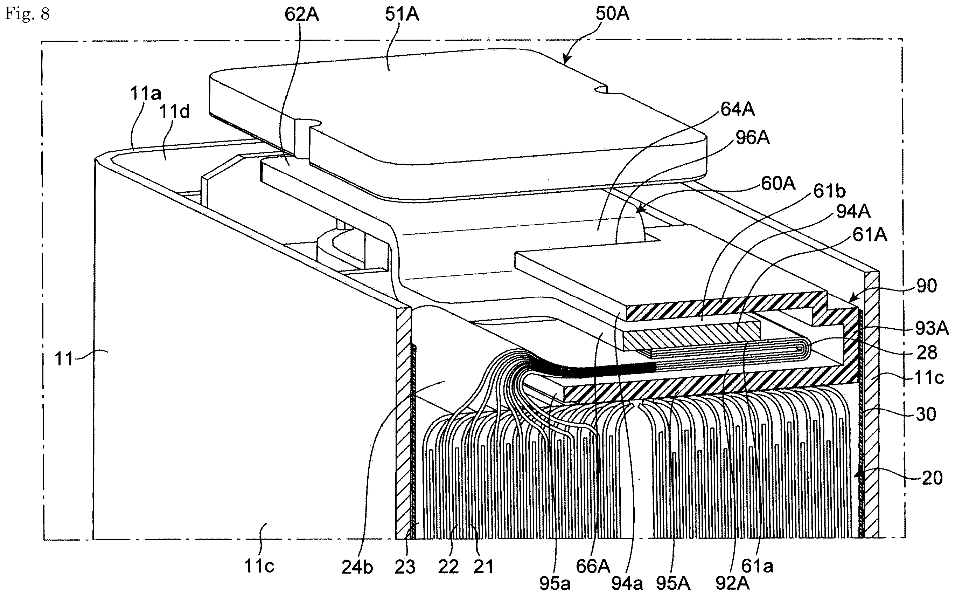

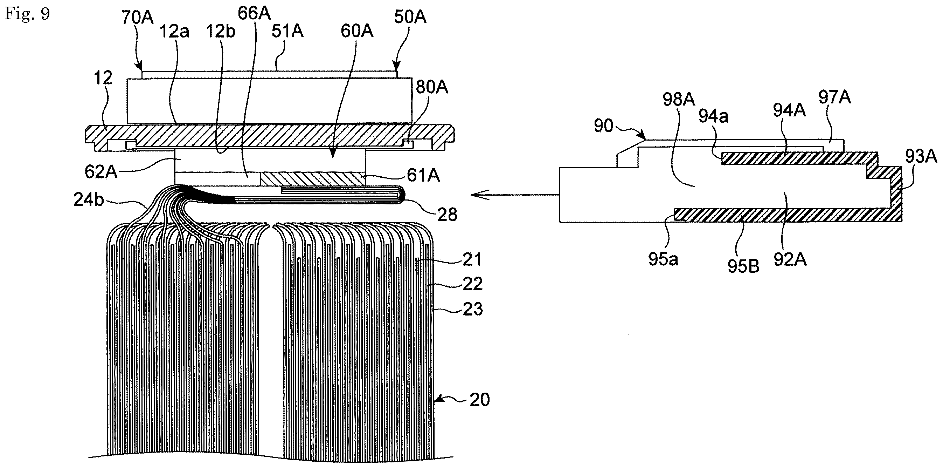

As shown most clearly in Fig. 8 and Fig. 9, the upper spacer 90 is interposed between the electrode assembly 20 and the inner surface 12b of the lid 12.

### (Detailed description of current collecting tab)

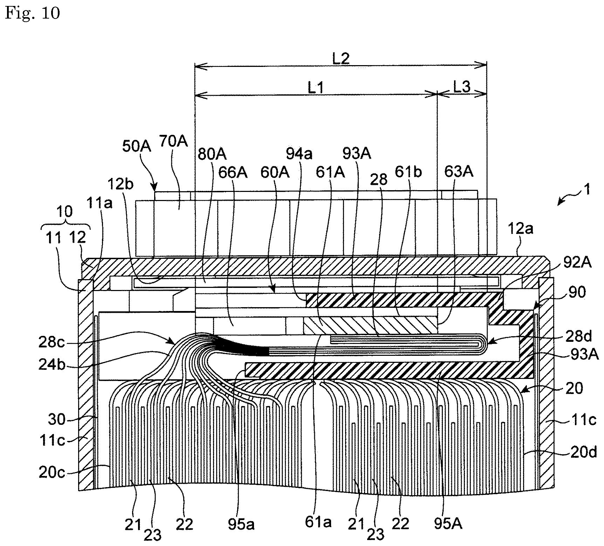

As shown most clearly in Fig. 10, with respect to the current collecting tabs 28, 29, a proximal portion side of each current collecting tab 28, 29 is positioned on the straight line portion (first portion) 20c on one side out of the pair of straight line portions 20c, 20d where the electrode sheets 21, 22 are stacked together by winding, the proximal portion side of the current collecting tab 28, 29 is bent toward the straight line portion (second portion) 20d on the other side, and a distal end side of the current collecting tab 28, 29 is electrically connected to the current collector 60A, 60B which is arranged in a stacking direction of the electrode sheets 21, 22 on a straight line portion 20d side.

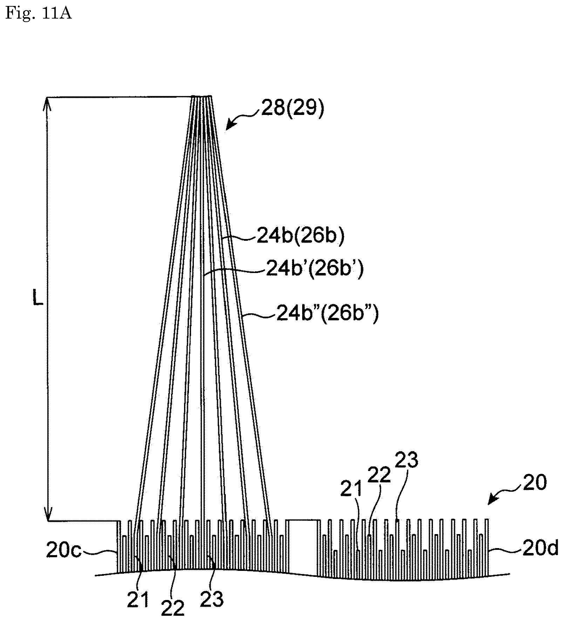

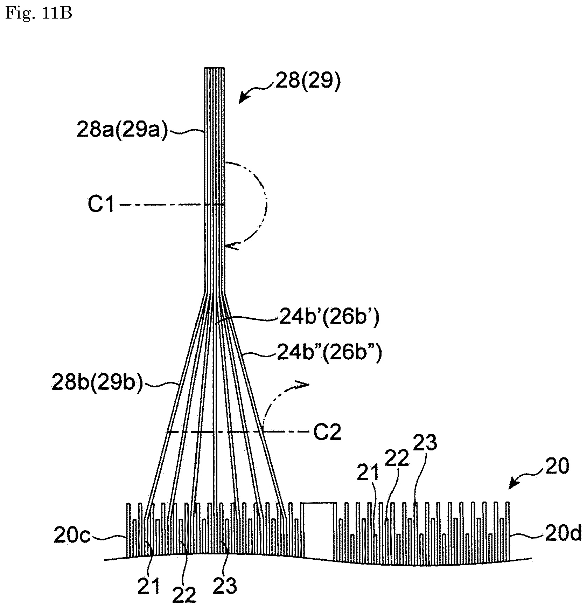

With reference to Fig. 11A and Fig. 11B in addition to Fig. 10, the current collecting tabs 28, 29 respectively include: a joint portion 28a, 29a on a distal end side where projecting portions 24b, 26b are joined to each other by welding; and a non-joint portion 28b, 29b on a proximal end side where projecting portions 24b, 26b are not joined to each other. In the joint portion 28a, 29a, the respective projecting portions 24b, 26b are integrally bent by folding. In the non-joint portion 28b, 29b, the respective projecting portions 24b, 26b can be freely bent at different curvatures by folding.

A total length L of the current collecting tab 28, 29 is set to a size which allows the current collecting tab 28, 29 to be bent two times between the electrode assembly 20 and the lid 12. A first bent portion 28c, 29c is positioned on a stacked electrode sheet 21, 22 side, and is bent toward a second straight line portion 20d side from a first straight line portion 20c side. A second bent portion 28d, 29d is positioned closer to a current collector 60A, 60B side than the first bent portion 28c, 29c, and is bent toward the first straight line portion 20c side from the second straight line portion 20d side. The second bent portion 28d, 29d is positioned in the vicinity of a second welded portion 61A, 61B which is a connecting portion where current correcting tab 28, 29 is connected to the current collector 60A, 60B. These bent portions 28c, 29c, 28d, 29d are named as the first bent portion and the second bent portion from a proximal portion side of the current collecting tab 28, 29. However, "first" and "second" are not intended to be used for indicating the order that these portions are bent.

The total length L of the current collecting tab 28, 29 is set to a size which allows the first and second bent portions 28c, 29c, 28d, 29d to possess predetermined flexibility (play). To be more specific, a size L2 from the first bent portion 28c, 29c to the second bent portion 28d, 29d is set larger than a size (distance) L1 from the first bent portion 28c, 29c to an end portion of the second welded portion 61A, 61B on a proximal portion side of the current collecting tab 28, 29. A size difference L3 between the sizes L1 and L2 is set to a length which can prevent the interference between the second bent portion 28d, 29d and the connecting portion 95A, 95B of the upper spacer 90.

The non-joint portion 28b, 29b of the current collecting tab 28, 29 is configured such that, using a total length of a first projecting portion 24b', 26b' positioned at the center of the non-joint portion 28b, 29b in the stacking direction as a reference, total lengths of the projecting portions 24b, 26b which are positioned outside the first projecting portion 24b', 26b' are gradually increased. To be more specific, the current collecting tab 28, 29 is formed in a line-symmetrical shape with respect to the first projecting portion 24b', 26b' positioned at the center of the first straight line portion 20c in the stacking direction of the electrode sheets 21, 22. As shown most clearly in Fig. 11A, the first projecting portion 24b', 26b' is disposed so as to extend coplanar with the electrode sheets 21, 22 with which the first projecting portion 24b', 26b' is continuously formed, and a projecting size of the first projecting portion 24b', 26b' from the end portion 20a is set as the total length L. Other projecting portions 24b, 26b are disposed in an inclined manner toward a distal end of the first projecting portion 24b', 26b' from the electrode sheets 21, 22, and projecting sizes of other projecting portions 24b, 26b are set such that distal ends of other projecting portions 24b, 26b agree with each other. Then, as shown in Fig. 11B, the joint portions 28a, 29a are formed by welding the distal end sides of all projecting portions 24b, 26b to each other. With such a configuration, the projecting portions 24b, 26b of the non-joint portion 28b, 29b which forms the first bent portion 28c, 29c can respectively have individually different optimum plays. The number of projecting portions 24b, 26b is not limited to an odd number and may be an even number. When the number of projecting portions 24b, 26b is an even number, the projecting portions 24b, 26b are formed into a line-symmetrical shape using a pair of first projecting portions 24b', 26b' positioned at the center in the stacking direction as a reference.

### (Detail of current collectors)

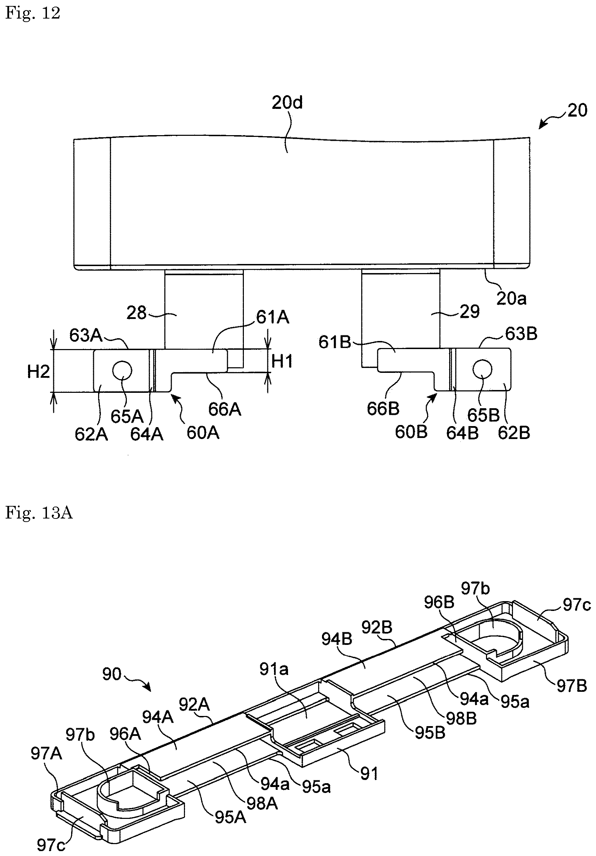

With reference to Fig. 7 and Fig. 12 in addition to Fig. 10, the current collectors 60A, 60B are configured such that the current collecting tabs 28, 29 are electrically connected to the external terminals 50A, 50B of the lid 12 respectively. The current collector 60A, 60B further includes, in addition to a welded portion 61A, 61B which is a joining portion and the swaged portion 62A, 62B which is a connecting portion, an escape portion 66A, 66B which prevents the interference of the first bent portion 28c, 29c of the current collecting tab 28, 29.

As shown most clearly in Fig. 12, in the current collector 60A, 60B, the welded portion 61A, 61B and an edge 63A, 63B of a swaged portion 62A, 62B on one end side are positioned on a straight line. The welded portion 61A, 61B and the swaged portion 62A, 62B respectively have a quadrangular shape as viewed in a plan view. A width H1 of the welded portion 61A, 61B in a direction that the current collecting tab 28, 29 projects is narrower than a width H2 of the swaged portion 62A, 62B. The swaged portion 62A, 62B and the welded portion 61A, 61B are disposed adjacently to each other in a direction which intersects with the direction that the current collecting tab 28, 29 projects (outside of the center line B in Fig. 3).

As shown most clearly in Fig. 7, between the welded portion 61A, 61B and the swaged portion 62A, 62B, a stepped portion 64A, 64B for arranging the swaged portion 62A, 62B above the upper spacer 90 is provided. The current collecting tab 28, 29 is welded to the welded portion 61A, 61B on a lower surface 61a side opposite to a side where the stepped portion 64A, 64B projects. In the swaged portion 62A, 62B, a through hole 65A, 65B which allows the shaft portion 52 and the rivet 53 of the external terminal 50A, 50B to pass therethrough is formed.

As shown most clearly in Fig. 12, due to the difference between the width H1 of the welded portion 61A, 61B and the width H2 of the swaged portion 62A, 62B, a space is formed adjacently to the welded portion 61A, 62A in a direction that the current collecting tab 28, 29 projects. That is, the escape portion 66A, 66B is formed. The width H2 of the swaged portion 62A, 62B is larger than a width of the straight line portion 20c, 20d of the electrode assembly 20 in the stacking direction. The swaged portion 62A, 62B is positioned at the end portion 20a of the electrode assembly 20 in a state where the swaged portion 62A, 62B straddles over the first and second straight line portions 20c, 20d. The escape portion 66A, 66B is formed in a portion of the welded portion 61A, 61B positioned above the first straight line portion 20c. That is, the escape portion 66A, 66B is formed by cutting out a portion of the welded portion 61A, 61B having the same width as the swaged portion 62A, 62B positioned above the first straight line portion 20c (a distal end (joint portion 28a, 29a) side in a direction that the current collecting tab 28, 29 projects in Fig. 12).

### (Detail of upper spacer)

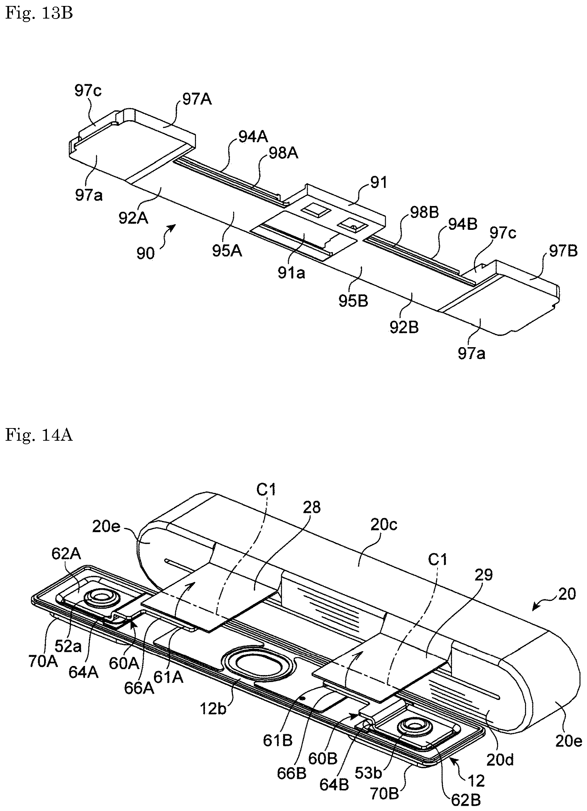

With reference to Fig. 9, Fig. 13A and Fig. 13B in addition to Fig. 10, the upper spacer 90 has an elongated rectangular shape in the same manner as the lid 12 as a whole. The upper spacer 90 includes: a center portion 91; and a pair of current collector housing portions 92A, 92B which extends from the center portion 91. The current collector housing portion 92A, 92B has one end thereof connected to the center portion 91, and the other end thereof connected to swaged portion arranging portion 97A, 97B positioned above the bent portion 20e, 20e of the electrode assembly 20 respectively. At the center portion 91, an opening 91a which opposedly faces a safety valve provided to the lid 12 is formed.

The current collector housing portion 92A, 92B includes: a side wall portion 93A, 93B; an upper wall portion 94A, 94B which extends from an upper end of the side wall portion 93A, 93B; and a lower wall portion 95A, 95B which extends from a lower end of the side wall portion 93A, 93B substantially parallel to the upper wall portion 94A, 94B. Between a distal end 94a of the upper wall portion 94A, 94B and a distal end 95a of the lower wall portion 95A, 95B, a transversely-elongated opening portion 98A, 98B is formed. The welded portion 61A, 61B of the current collector 60A, 60B and a distal end side of the current collecting tab 28, 29 including the second bent portion 28d, 29d are inserted into the transversely-elongated opening portion 98A, 98B.

The side wall portions 93A, 93B are positioned on a second straight line portion 20d side of the electrode assembly 20. The upper wall portion 94A, 94B extends toward a first straight line portion 20c side from the second straight line portion 20d side between the welded portion 61A, 61B of the current collector 60A, 60B and the inner surface 12b of the lid 12. The distal end 94a of the upper wall portion 94A, 94B is positioned in the vicinity of the escape portion 66A, 66B so as to cover the welded portion 61A, 61B of the current collector 60A, 60B. The lower wall portion 95A, 95B extends toward the first straight line portion 20c side from the second straight line portion 20d side between the end portion 20a of the electrode assembly 20 and the current collecting tab 28, 29. The distal end 95a of the lower wall portion 95A, 95B is positioned on the first straight line portion 20c of the electrode assembly 20 between the second projecting portion 24b", 26b" positioned at an end portion on a second straight line portion 20d side and the first projecting portion 24b', 26b' positioned at the center. That is, the lower wall portion 95A, 95B is not formed above the first straight line portion 20c thus forming a space where the current collecting tab 28, 29 can be disposed toward the opening portion 98A, 98B.

With reference to Fig. 8 and Fig. 13A. An insertion groove 96A, 96B is formed on an end portion of the upper wall portion 94A, 94B on a swaged portion arranging portion 97A, 97B side. When the welded portion 61A, 61B of the current collector 60A, 60B is disposed in the inside of the current collector housing portion 92A, 92B, the stepped portion 64A, 64B of the current collector 60A, 60B is positioned in the inside of the insertion groove 96A, 96B. With such a configuration, the swaged portion 62A, 62B of the current collector 60A, 60B is positioned on the swaged portion arranging portion 97A, 97B.

As shown most clearly in Fig. 13A and Fig. 13B, the swaged portion arranging portion 97A, 97B includes: a bottom wall portion 97a; and an inner peripheral wall portion 97b which is formed on the bottom wall portion 97a. The enlarged diameter portion 52a, 53b of the external terminal 50A, 50B is positioned in the inside of the inner peripheral wall portion 97b. On the bottom wall portion 97a, an outer peripheral wall portion 97c on which the swaged portion 62A, 62B of the current collector 60A, 60B is disposed is further provided so as to surround the inner peripheral wall portion 97b.

Next, assembling steps of the battery 1 are described.

As shown in Fig. 7 and Fig. 12, the electrode assembly 20 is disposed transversely such that a first straight line portion 20c side of the electrode assembly 20 from which the current collecting tabs 28, 29 project is positioned downward. Next, the current collectors 60A, 60B are disposed such that the swaged portions 62A, 62B are positioned above the welded portions 61A, 61B respectively, and the electrode assembly 20 is positioned on an edge 63A, 63B side of the welded portions 61A, 61B. Then, the welded portions 61A, 61B of the current collectors 60A, 60B are disposed on upper surfaces of the distal ends of the current collecting tabs 28, 29 respectively, and the current collecting tabs 28, 29 are connected to a lower surface 61a side of the welded portions 61A, 61B respectively by ultrasonic welding.

Then, as shown in Fig. 14A, the electrode assembly 20 is disposed such that the first straight line portion 20c from which the current collecting tabs 28, 29 project is positioned upward. Next, the upper packings 70A, 70B and the external terminals 50A, 50B are mounted on the outer surface 12a of the lid 12, and the lid 12 is disposed such that the inner surface 12b is positioned upward. Subsequently, the lower packings 80A, 80B and the swaged portions 62A, 62B of the current collectors 60A, 60B are disposed on an inner surface 12b side of the lid 12. Then, the shaft portions 52 and the rivets 53 of the external terminals 50A, 50B are caulked thus electrically connecting the external terminals 50A, 50B and the current collectors 60A, 60B to each other respectively. In accordance with such steps, the electrode assembly 20 and the external terminals 50A, 50B are electrically connected to each other through the current collecting tabs 28, 29 and the current collectors 60A, 60B.

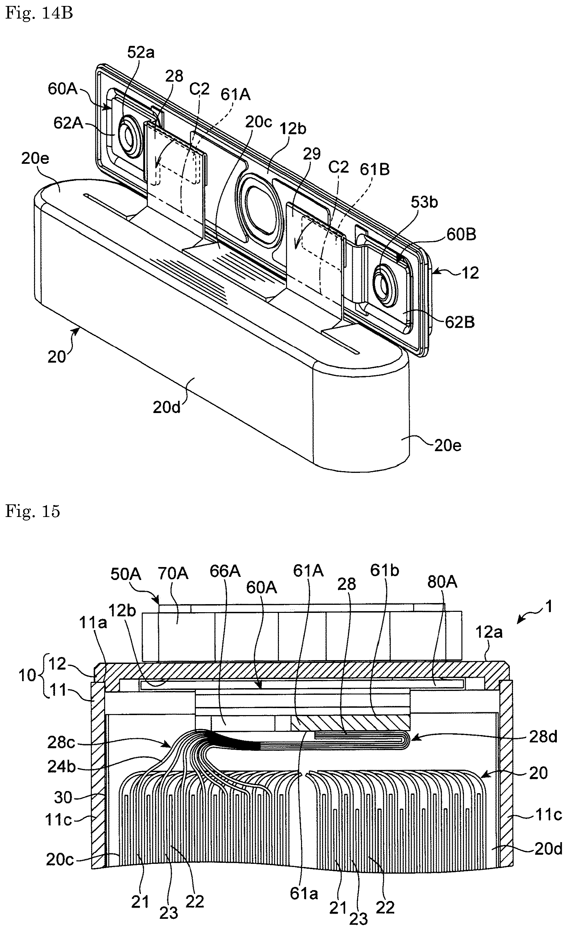

When the lid 12 is assembled to the electrode assembly 20, subsequently, as shown in Fig. 11B and Fig. 14A, the current collecting tabs 28, 29 are bent to 180 degrees about bending positions C1 in the vicinity of the welded portions 61A, 61B of the current collectors 60A, 60B respectively. The bending direction of the current collecting tabs 28, 29 is a direction toward a side opposite to the second straight line portion 20d such that the lid 12 is positioned at an upper side in an assembled state. Next, as shown in Fig. 11B and Fig. 14B, the current collecting tabs 28, 29 are bent to 90 degrees about bending positions C2 on a proximal portion side respectively. The bending direction of the current collecting tabs 28, 29 is a direction toward a second straight line portion 20d side such that the lid 12 is positioned at an upper side in an assembled state.

In accordance with such steps, as shown in Fig. 9, the lid 12 is disposed parallel to the end portion 20a of the electrode assembly 20. In such a state, the first bent portions 28c, 29c of the current collecting tabs 28, 29 are positioned above the first straight line portion 20c, and bulged upper peak portions of the first bent portions 28c, 29c are positioned above the lower surfaces 61a of the current collectors 60A, 60B through the escape portions 66A, 66B respectively. That is, the peak portions of the first bent portion 28c, 29c are positioned between the lower surfaces (opposedly facing surfaces) 61a of the current collectors 60A, 60B which opposedly face the electrode assembly 20 and the lid 12 of the outer case 10 respectively. The second bent portions 28d, 29d of the current collecting tabs 28, 29 are positioned above the second straight line portion 20d, and the welded portions 61A, 61B to which the current collecting tabs 28, 29 are joined respectively are also positioned above the second straight line portion 20d.

Next, the upper spacer 90 is disposed on a side of the electrode assembly 20a second straight line portion 20d side, and the upper spacer 90 is inserted between the electrode assembly 20 and the lid 12 from a side. To be more specific, the distal ends 94a, 95a of the current collector housing portions 92A, 92B are disposed to face the electrode assembly 20 in an opposed manner respectively. Next, as shown in Fig. 8 and Fig. 10, the upper wall portions 94A, 94B are inserted between the welded portions 61A, 61B and the inner surface 12b of the lid 12 respectively, and the lower wall portions 95A, 95B are inserted between the current collecting tabs 28, 29 and the end portion 20a of the electrode assembly 20 respectively. In accordance with such steps, joint portions each of which includes the welded portion 61A, 61B of the current collector 60A, 60B and the second bent portion 28d, 29d are disposed in the inside of the current collector housing portions 92A, 92B respectively.

Next, as shown in Fig. 1 and Fig. 10, the electrode assembly 20 and the outer peripheral portion of the upper spacer 90 are covered by the insulation sheet 30 and, thereafter, the electrode assembly 20 is housed in the inside of the case body 11 together with the insulation sheet 30. Finally, the lid 12 is pressed to a case body 11 side, and the case body 11 is sealed by welding the lid 12 to the opening 11a of the case body 11.

On an end portion 20a side of the electrode assembly 20 of the battery 1 assembled as described above, a proximal portion (non-joint portions 28b, 29b) side of the current collecting tabs 28, 29 is positioned on a first straight line portion 20c side of the electrode assembly 20, and a distal end (joint portions 28a, 29a) side of the current collecting tabs 28, 29 is positioned on a second straight line portion 20d side. With such a configuration, the first bent portions 28c, 29c of the current collecting tabs 28, 29 are positioned on the first straight line portion 20c side, and the welded portions 61A, 61B of the current collectors 60A, 60B which are joined to the current collecting tabs 28, 29 respectively are positioned on the second straight line portion 20d side. That is, the portion where the first bent portion 28c, 29c which bulges due to imparting of play is disposed and the portion where the bulky joint portion 28a, 29a is disposed are disposed adjacently to each other in a transverse direction at the end portion 20a of the electrode assembly 20. With such a configuration, a height of the electrode assembly 20 at the end portion 20a can be lowered and hence, a distance between the electrode assembly 20 and the lid 12 can be decreased. Accordingly, when the energy storage devices 1 having the same height are manufactured, the electrode assembly 20 can be formed with a large size and hence, the energy storage 1 can acquire a large capacity.

Further, the current collecting tabs 28, 29 are formed with the total length L which allows the current collecting tabs 28, 29 to be bent two times at the end portion 20a of the electrode assembly 20. Accordingly, operability of an operation of connecting the current collectors 60A, 60B which are connected to the current collecting tabs 28, 29 and the external terminals 50A 50B to each other can be enhanced. To be more specific, in swaging the shaft portion 52 and the rivet 53 of the external terminals 50A, 50B, a swaging device can be easily disposed such that the swaging device is not brought into contact with the electrode assembly 20. Further, the current collecting tabs 28, 29 respectively have the total length L which allows the second bent portions 28d, 29d to be disposed in the vicinity of the welded portions 61A, 61B of the current collectors 60A, 60B and hence, the lengths of the current collecting tabs 28, 29 are set as short as possible while enhancing assembling property of the current collectors 60A, 60B and the external terminals 50A, 50B. Accordingly, a resistance during energization of the battery 1 can be minimized.

The size L2 from the first bent portion 28c, 29c to the second bent portion 28d, 29d is set larger than the size L1 from the first bent portion 28c, 29c of the current collecting tab 28, 29 to the welded portion 61A, 61B of the current collector 60A, 60B. Accordingly, it is possible to impart flexibility to the current collecting tabs 28, 29 per se, that is, to the first bent portions 28c, 29c and the second bent portions 28d, 29d. As a result, vibrations and an impact which are applied to the current collecting tabs 28, 29 at the time of assembling the battery 1 or during traveling of a vehicle after the battery 1 is mounted on the vehicle can be decreased. Accordingly, it is possible to prevent the elongation and breaking of the current collecting tabs 28, 29.

In the first bent portions 28c, 29c of the current collecting tabs 28, 29, using the total length of the first projecting portion 24b', 26b' positioned at the center in the stacking direction as a reference, the total lengths of the projecting portions 24b, 26b positioned outside the first projecting portion 24b', 26b' are gradually increased. Further, the first bent portion 28c, 29c is formed by bending the non-joint portion 28b, 29b of the current collecting tab 28, 29. With such a configuration, it is possible to set individually different optimum plays to the respective projecting portions 24b, 26b. Accordingly, it is possible to prevent with certainty the elongation and breaking of the respective projecting portions 24b, 26b.

### (Second embodiment)

Fig. 15 shows a battery 1 of a second embodiment. The second embodiment differs from the first embodiment with respect to a point that second bent portions 28d, 29d are bent below welded portions 61A, 61B of current collectors 60A, 60B respectively. The second embodiment can acquire the same manner of operation and the same advantageous effects as the first embodiment. Further, in the second embodiment, total lengths of current collecting tabs 28, 29 can be set as short as possible and hence, electric resistance at the time of energization can be made small. Still further, there is no possibility that the current collecting tabs 28, 29 which are connected to the current collectors 60A, 60B respectively are brought into contact with an outer case 10 and hence, as shown in the drawing, it is unnecessary to arrange an upper spacer 90 in the inside of the outer case 10. Alternatively, in the second embodiment, it may be possible to use an upper spacer 90 where a current collector housing portion 92A, 92B has no side wall portion 93A, 93B. With such configurations, the number of parts can be decreased or the structure of the upper spacer 90 can be simplified and hence, the reduction in cost can be realized.

### (Third embodiment)

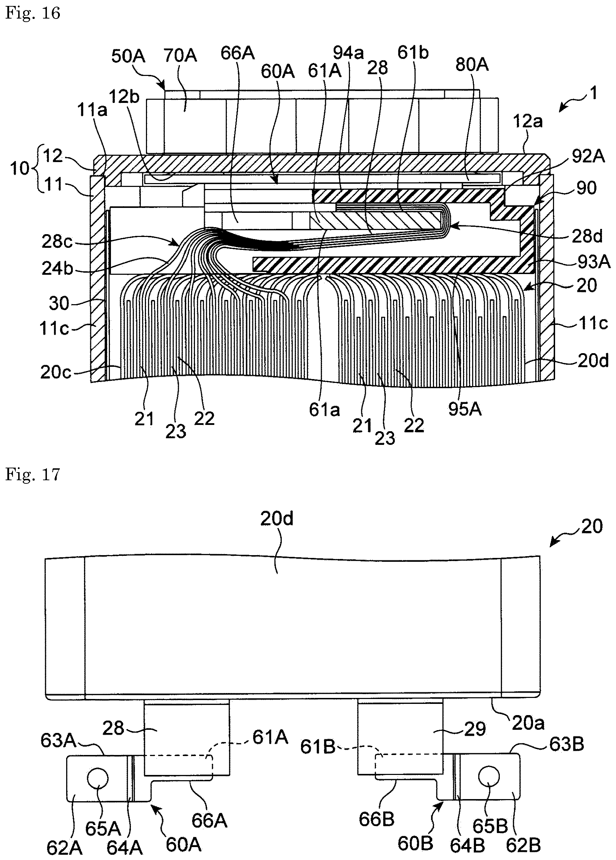

Fig. 16 shows a battery 1 of a third embodiment. The third embodiment differs from the first embodiment with respect to a point that current collecting tabs 28, 29 are joined to upper surfaces 61b of welded portions 61A, 61B of current collectors 60A, 60B, and edges 63A, 63B of the welded portions 61A, 61B are utilized for bending of second bent portions 28d, 29d.

As shown in Fig. 17, in assembling the current collectors 60A, 60B to the current collecting tabs 28, 29, in the same manner as the first embodiment, an electrode assembly 20 is disposed transversely such that a first straight line portion 20c side is positioned downward, and the current collectors 60A, 60B are disposed such that swaged portions 62A, 62B are positioned above the welded portions 61A, 61B respectively. Further, the electrode assembly 20 is disposed on an edge 63A, 63B side of the welded portions 61A, 61B, and the current collecting tabs 28, 29 are disposed on an upper surfaces 61b side of the welded portions 61A, 61B of the current collectors 60A, 60B. Then, the current collecting tabs 28, 29 are connected to the upper surface 61b side of the welded portions 61A, 61B respectively by ultrasonic welding.

Next, in the same manner as the first embodiment, the current collectors 60A, 60B connected to the current collecting tabs 28, 29 are disposed on an inner surface 12b of a lid 12 on which upper packings 70A, 70B, external terminals 50A, 50B, and lower packings 80A, 80B are disposed, and the current collectors 60A, 60B and the external terminals 50A, 50B are connected to each other by welding respectively.

Next, in arranging the lid 12 on an end portion 20a of the electrode assembly 20 by bending the current collecting tabs 28, 29, firstly, the current collecting tabs 28, 29 are bent so as to be wound around the edges 63A, 63B of the current collectors 60A, 60B respectively thus forming the second bent portions 28d, 29d. Subsequently, by bending the current collecting tabs 28, 29 to 90 degrees at a proximal portion side, the lid 12 is disposed on the end portion 20a of the electrode assembly 20.

Then, in the same manner as the first embodiment, an upper spacer 90 is disposed between the electrode assembly 20 and the lid 12 and, thereafter, an insulation sheet 30 is disposed on an outer peripheral portion of the outer spacer 90. Next, the electrode assembly 20 is disposed in the inside of the case body 11, and an opening 11a of the case body 11 is sealed by the lid 12.

The third embodiment having the above-mentioned configuration can acquire substantially the same manner of operation and advantageous effects as the first embodiment. The second bent portions 28d, 29d can be formed so as to be wound around the current collectors 60A, 60B respectively and hence, operability of the assembling operation can be enhanced. In the same manner as the second embodiment, total lengths of the current collecting tabs 28, 29 can be set as short as possible. Since there is no possibility that the current collecting tabs 28, 29 are brought into contact with the outer case 10, a configuration may be adopted where an upper spacer 90 is not disposed in the inside of the outer case 10 or a configuration may be adopted where side wall portions 93A, 93B of current collector housing portions 92A, 92B are not provided.

The battery 1 of the present invention is not limited to the above-mentioned embodiments, and various modifications are conceivable.

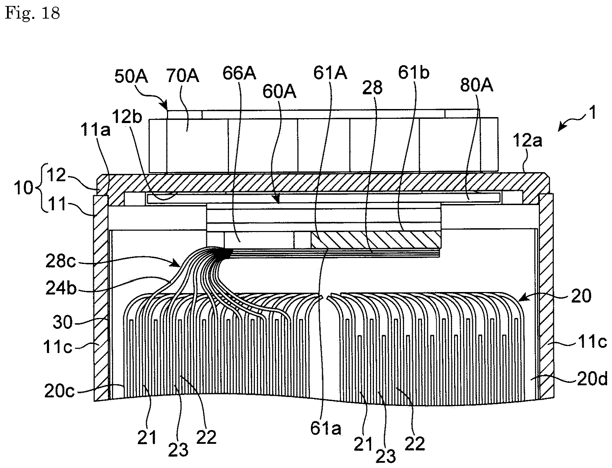

For example, although the current collecting tabs 28, 29 are bent two times between the electrode assembly 20 and the lid 12 in the embodiments, as shown in Fig. 18, the current collecting tabs 28, 29 may be bent only one time (first bent portions 28c, 29c). Alternatively, the current collecting tabs 28, 29 may be bent three or more times. That is, in the current collectors 60A, 60B, by adopting the configuration where first bent portions 28c, 29c are disposed on a first straight line portion 20c side from which current collecting tabs 28, 29 project, and welded portions 61A, 61B of the current collectors 60A, 60B are disposed on a second straight line portion 20d side from which the current collecting tabs 28, 29 do not project, the number of bending times of the current collecting tabs 28, 29 may be changed as desired.

Further, in the embodiments, with respect to the current collecting tabs 28, 29, total lengths of the projecting portions 24b, 26b positioned outside the projecting portions 24b', 26b' are set such that the total lengths are gradually increased. However, the total lengths of all projecting portions 24b, 26b may be set equal to each other. Further, in the embodiments, the joint portions 28a, 29a and the non-joint portions 28b, 29b are formed by welding the projecting portions 24b, 26b. However, the joint portions 28a, 29a may not be formed in advance.

The electrode assembly 20 is housed in the inside of the case body 11 such that the current collecting tabs 28, 29 are positioned on an opening 11a side. However, the electrode assembly 20 may be housed in the inside of the case body 11 such that the current collecting tabs 28, 29 are positioned on one short-side wall portion 11d side. In this case, the external terminals 50A, 50B may be disposed on the case body 11.

In an example that does not form part of the present invention, the electrode assembly 20 may be a stacking-type electrode assembly which is formed by stacking, in one direction, positive electrode sheets, negative electrode sheets and separators which respectively have a rectangular shape.

The present invention is not limited to a secondary battery such as a non-electrolyte secondary battery such as a lithium ion battery, and is also applicable to a primary battery or various kinds of energy storage devices including a capacitor.

### DESCRIPTION OF REFERENCE SIGNS

- 1:: battery (energy storage device)
- 10:: outer case (case)
- 11:: case body
- 11a:: opening
- 11b:: bottom wall portion
- 11c:: long-side wall portion
- 11d:: short-side wall portion
- 12:: lid
- 12a:: outer surface
- 12b:: inner surface
- 20:: electrode assembly
- 20a:: end portion
- 20b:: end portion
- 20c:: first straight line portion
- 20d:: second straight line portion
- 20e:: bent portion
- 21:: positive electrode sheet
- 22:: negative electrode sheet
- 23:: separator
- 24:: positive electrode metal foil
- 24a:: non-coated portion
- 24b:: projecting portion
- 24b':: first projecting portion
- 24b":: second projecting portion
- 25:: positive active material layer
- 26:: negative electrode metal foil
- 26a:: non-coated portion
- 26b:: projecting portion
- 26b':: first projecting portion
- 26b":: second projecting portion
- 27:: negative active material layer
- 28:: positive electrode current collecting tab
- 28a:: joint portion
- 28b:: non-joint portion
- 28c:: first bent portion
- 28d:: second bent portion
- 29:: negative electrode current collecting tab
- 29a:: joint portion
- 29b:: non-joint portion
- 29c:: first bent portion
- 29d:: second bent portion
- 30:: insulation sheet
- 40:: bottom spacer
- 50A, 50B:: external terminal
- 51A, 51B:: plate-like portion
- 52:: shaft portion
- 52a:: enlarged diameter portion
- 53:: rivet
- 53a:: flange portion
- 53b:: enlarged diameter portion
- 60A, 60B:: current collector
- 61A, 61B:: welded portion (joining portion)
- 61a:: lower surface
- 61b:: upper surface
- 62A, 62B:: swaged portion
- 63A, 63B:: edge
- 64A, 64B:: stepped portion
- 65A, 65B:: through hole
- 66A, 66B:: escape portion
- 70A, 70B:: upper packing
- 80A, 80B:: lower packing
- 90:: upper spacer
- 91:: center portion
- 91a:: opening
- 92A, 92B:: current collector housing portion
- 93A, 93B:: side wall portion
- 94A, 94B:: upper wall portion
- 94a:: distal end
- 95A, 95B:: lower wall portion
- 95a:: distal end
- 96A, 96B:: insertion groove
- 97A, 97B:: swaged portion arranging portion
- 97a:: bottom wall portion
- 97b:: inner peripheral wall portion
- 97c:: outer peripheral wall portion
- 98A, 98B:: opening portion
- A:: winding axis
- B:: center line
- C1, C2:: bending position

## Claims

1. An energy storage device (1) comprising:
an electrode assembly (20) formed by winding a positive electrode sheet (21), a negative electrode sheet (22) and a separator (23) about a winding axis (A), wherein an end portion (20a) of the electrode assembly (20) as viewed in a first direction that the winding axis (A) extends is formed into an elongated circular shape having first and second straight line portions (20c, 20d) which opposedly face each other, and a pair of curved portions (20e) which opposedly face each other so as to connect the first and second straight line portions (20c, 20d), and having current collecting tabs (28, 29) which projects from the first straight line portion (20c) of the electrode assembly (20), the electrode assembly (20) being housed in a case (10);
external terminals (50A, 50B) disposed on the case (10); and
current collectors (60A, 60B) disposed between the electrode assembly (20) and the case (10), electrically connected to the respective external terminals (50A, 50B), and electrically connected to the respective current collecting tabs (28, 29) at respective connecting portions (61A, 61B), wherein the each current collector (60A, 60B) has a upper surface (61b) opposed to the case (10) and a lower surface (61a) opposed to the electrode assembly (20),
wherein the current collecting tabs (28, 29) are in direct contact with the respective lower surfaces (61a) of the respective current collectors (60A, 60B);
wherein
the current collecting tabs (28, 29) comprise a positive electrode current collecting tab (28) and a negative electrode current collecting tab (29),
the current collectors (60A, 60B) comprise a positive electrode current collector (60A) and a negative electrode current collector (60B), and
the positive electrode current collecting tab (28) and the negative electrode current collecting tab (29) are disposed on the first straight line portion (20c) in a spaced-apart manner in a second direction that the first straight line portion (20c) extends, and the respective current collecting tabs (28, 29) and the respective current collectors (60A, 60B) are directly connected to each other only above the second straight line portion (20d) when viewed in the second direction.

2. The energy storage device (1) according to claim 1, wherein the each current collecting tab (28, 29) has two or more bent portions including a first bent portion (28c, 29c) and a second bent portion (28d, 29d), the first bent portion (28c, 29c) being positioned closer to the electrode assembly (20) than the second bent portion (28d, 29d) is, the second bent portion (28d, 29d) being positioned closer to the current collectors (60A, 60B) than the first bent portion (28c, 29c) is.

3. The energy storage device (1) according to claim 2, wherein the second bent portions (28d, 29d) of the current collecting tabs (28, 29) are disposed between the current collectors (60A, 60B) and the case (10), and a size of the each current collecting tab (28, 29) from the first bent portion (28c, 29c) to the second bent portion (28d, 29d) is set longer than a size of the each current collecting tab (28, 29) from the second bent portion (28d, 29d) to the connecting portion (61A, 61B).

4. The energy storage device (1) according to any one of claims 1 to 3, wherein the current collecting tabs (28, 29) comprise a plurality of current collecting tabs (28, 29) projecting from the first straight line portion (20c) of the electrode assembly (20), and
the current collecting tabs (28, 29) are stacked at their distal ends and are joined to each other.

5. The energy storage device (1) according to any one of claims 2 to 4, wherein the first bent portion (28c, 29c) of the each current collecting tab (28, 29), in a side view, bulges beyond the lower surface (61a) of the each current collector (60A, 60B) toward the case (10).

6. The energy storage device (1) according to claim 1, wherein the each current collecting tab (28, 29) comprises a bent portion that, in a side view, bulges beyond the lower surface (61a) of the each current collector (60A, 60B) toward the case (10).

7. The energy storage device (1) according to claim 6, wherein the each current collector (60A, 60B) has an escape portion (66A, 66B) where the first bent portion (28c, 29c) is disposed.

## Patentansprüche

1. Stromspeichervorrichtung (1), umfassend:
eine Elektrodenanordnung (20), die durch Wickeln eines Positivelektrodenblatts (21), eines
Negativelektrodenblatts (22) und eines Separators (23) um eine Wickelachse (A) gebildet ist, wobei ein Endabschnitt (20a) der Elektrodenanordnung (20), in einer ersten Richtung betrachtet, in der sich die Wickelachse (A) erstreckt, in einer länglichen Kreisform mit einem ersten und einem zweiten geradlinigen Abschnitt (20c, 20d), die einander gegenüberliegen, und einem Paar gekrümmter Abschnitte (20e), die einander gegenüberliegen, um den ersten und den zweiten geradlinigen Abschnitt (20c, 20d) zu verbinden, sowie mit Stromabnehmeransätzen (28, 29),
die von dem ersten geradlinigen Abschnitt (20c) der Elektrodenanordnung (20) vorstehen, gebildet ist, wobei die Elektrodenanordnung (20) in einem Gehäuse (10) aufgenommen ist;
externe Anschlüsse (50A, 50B), die auf dem Gehäuse (10) angeordnet sind; und
Stromabnehmer (60A, 60B), die zwischen der Elektrodenanordnung (20) und dem Gehäuse (10) angeordnet sind, die mit den jeweiligen externen Anschlüssen (50A, 50B) elektrisch verbunden sind und die mit den jeweiligen Stromabnehmeransätzen (28, 29) an jeweiligen Verbindungsabschnitten (61A, 61B) elektrisch verbunden sind, wobei jeder Stromabnehmer (60A, 60B) eine obere Fläche (61b), die dem Gehäuse (10) gegenüberliegt, und
eine untere Fläche (61a), die der Elektrodenanordnung (20) gegenüberliegt, aufweist,
wobei die Stromabnehmeransätze (28, 29) mit den jeweiligen unteren Flächen (61a) der jeweiligen Stromabnehmer (60A, 60B) in direktem Kontakt stehen;
wobei
die Stromabnehmeransätze (28, 29) einen
Positivelektroden-Stromabnehmeransatz (28) und einen Negativelektroden-Stromabnehmeransatz (29) umfassen,
die Stromabnehmer (60A, 60B) einen Positivelektroden-Stromabnehmer (60A) und einen Negativelektroden-Stromabnehmer (60B) umfassen und
der Positivelektroden-Stromabnehmeransatz (28) und der Negativelektroden-Stromabnehmeransatz (29) auf dem ersten geradlinigen Abschnitt (20c) in einer voneinander beabstandeten Weise in einer zweiten Richtung, in der sich der erste geradlinige Abschnitt (20c) erstreckt,
angeordnet sind und die jeweiligen Stromabnehmeransätze (28, 29) und die jeweiligen Stromabnehmer (60A, 60B), in der zweiten Richtung betrachtet, direkt miteinander nur über dem zweiten geradlinigen Abschnitt (20d) verbunden sind.

2. Stromspeichervorrichtung (1) nach Anspruch 1, wobei jeder Stromabnehmeransatz (28, 29) zwei oder mehr gebogene Abschnitte aufweist, die einen ersten gebogenen Abschnitt (28c, 29c) und einen zweiten gebogenen Abschnitt (28d, 29d) umfassen, wobei der erste gebogene Abschnitt (28c, 29c) näher zu der Elektrodenanordnung (20) positioniert ist als der zweite gebogene Abschnitt (28d, 29d), wobei der zweite gebogene Abschnitt (28d, 29d) näher zu den Stromabnehmern (60A, 60B) positioniert ist als der erste gebogene Abschnitt (28c, 29c).

3. Stromspeichervorrichtung (1) nach Anspruch 2, wobei die zweiten gebogenen Abschnitte (28d, 29d) der Stromabnehmeransätze (28, 29) zwischen den Stromabnehmern (60A, 60B) und dem Gehäuse (10) angeordnet sind und eine Größe jedes Stromabnehmeransatzes (28, 29) von dem ersten gebogenen Abschnitt (28c, 29c) zu dem zweiten gebogenen Abschnitt (28d, 29d) länger festgelegt ist als eine Größe jedes Stromabnehmeransatzes (28, 29) von dem zweiten gebogenen Abschnitt (28d, 29d) zu dem Verbindungsabschnitt (61A, 61B).

4. Stromspeichervorrichtung (1) nach einem der Ansprüche 1 bis 3, wobei die Stromabnehmeransätze (28, 29) mehrere Stromabnehmeransätze (28, 29) umfassen, die von dem ersten geradlinigen Abschnitt (20c) der Elektrodenanordnung (20) vorstehen, und
die Stromabnehmeransätze (28, 29) an ihren distalen Enden gestapelt und miteinander verbunden sind.

5. Stromspeichervorrichtung (1) nach einem der Ansprüche 2 bis 4, wobei sich der erste gebogene Abschnitt (28c, 29c) jedes Stromabnehmeransatzes (28, 29) in einer Seitenansicht über die untere Fläche (61a) jedes Stromabnehmers (60A, 60B) hinaus hin zu dem Gehäuse (10) wölbt.

6. Stromspeichervorrichtung (1) nach Anspruch 1, wobei jeder Stromabnehmeransatz (28, 29) einen gebogenen Abschnitt umfasst, der sich in einer Seitenansicht über die untere Fläche (61a) jedes Stromabnehmers (60A, 60B) hinaus hin zu dem Gehäuse (10) wölbt.

7. Stromspeichervorrichtung (1) nach Anspruch 6, wobei jeder Stromabnehmer (60A, 60B) dort einen Ausbruchabschnitt (66A, 66B) aufweist, wo der erste gebogene Abschnitt (28c, 29c) angeordnet ist.

## Revendications

1. Dispositif de stockage d'énergie (1) comprenant :
un ensemble d'électrodes (20) formé par l'enroulement d'une feuille d'électrode positive (21), d'une feuille d'électrode négative (22) et d'un séparateur (23) autour d'un axe d'enroulement (A), dans lequel une partie d'extrémité (20a) de l'ensemble d'électrodes (20), vue dans une première direction dans laquelle l'axe d'enroulement (A) s'étend, est formée en une forme circulaire allongée ayant de première et seconde parties rectilignes (20c, 20d) qui se font face de manière opposée l'une à l'autre, et une paire de parties incurvées (20e) qui se font face de manière opposée l'une à l'autre de façon à relier les première et seconde parties rectilignes (20c, 20d), et ayant des pattes de collecte de courant (28, 29) qui font saillie depuis la première partie rectiligne (20c) de l'ensemble d'électrodes (20), l'ensemble d'électrodes (20) étant logé dans un boîtier (10) ;
des bornes externes (50A, 50B) disposées sur le boîtier (10) ; et
des collecteurs de courant (60A, 60B) disposés entre l'ensemble d'électrodes (20) et le boîtier (10),
connectés électriquement aux bornes externes respectives (50A, 50B), et connectés électriquement aux pattes de collecte de courant respectives (28, 29) au niveau de parties de connexion respectives (61A, 61B),
dans lequel chaque collecteur de courant (60A, 60B) a une surface supérieure (61b) opposée au boîtier (10) et une surface inférieure (61a) opposée à l'ensemble d'électrodes (20),
dans lequel les pattes de collecte de courant (28, 29) sont en contact direct avec les surfaces inférieures respectives (61a) des collecteurs de courant respectifs (60A, 60B) ;
dans lequel
les pattes de collecte de courant (28, 29) comprennent une patte de collecte de courant d'électrode positive (28) et une patte de collecte de courant d'électrode négative (29),
les collecteurs de courant (60A, 60B) comprennent un collecteur de courant d'électrode positive (60A) et un collecteur de courant d'électrode négative (60B), et
la patte de collecte de courant d'électrode positive (28) et la patte de collecte de courant d'électrode négative (29) sont disposées sur la première partie rectiligne (20c) de manière espacée dans une seconde direction dans laquelle la première partie rectiligne (20c) s'étend, et les pattes de collecte de courant respectives (28, 29) et les collecteurs de courant respectifs (60A, 60B) sont directement connectés les uns aux autres uniquement au-dessus de la seconde partie rectiligne (20d) lorsqu'ils sont vus dans la seconde direction.

2. Dispositif de stockage d'énergie (1) selon la revendication 1, dans lequel chaque patte de collecte de courant (28, 29) a deux parties pliées ou plus incluant une première partie pliée (28c, 29c) et une seconde partie pliée (28d, 29d), la première partie pliée (28c, 29c) étant positionnée plus près de l'ensemble d'électrodes (20) que ne l'est la seconde partie pliée (28d, 29d), la seconde partie pliée (28d, 29d) étant positionnée plus près des collecteurs de courant (60A, 60B) que ne l'est la première partie pliée (28c, 29c).

3. Dispositif de stockage d'énergie (1) selon la revendication 2, dans lequel les secondes parties pliées (28d, 29d) des pattes de collecte de courant (28, 29) sont disposées entre les collecteurs de courant (60A, 60B) et le boîtier (10), et une taille de chaque patte de collecte de courant (28, 29) depuis la première partie pliée (28c, 29c) jusqu'à la seconde partie pliée (28d, 29d) est prévue pour être plus longue qu'une taille de chaque patte de collecte de courant (28, 29) depuis la seconde partie pliée (28d, 29d) jusqu'à la partie de connexion (61A, 61B).

4. Dispositif de stockage d'énergie (1) selon l'une quelconque des revendications 1 à 3, dans lequel les pattes de collecte de courant (28, 29) comprennent une pluralité de pattes de collecte de courant (28, 29) faisant saillie depuis la première partie rectiligne (20c) de l'ensemble d'électrodes (20), et les pattes de collecte de courant (28, 29) sont empilées au niveau de leurs extrémités distales et sont jointes les unes aux autres.

5. Dispositif de stockage d'énergie (1) selon l'une quelconque des revendications 2 à 4, dans lequel la première partie pliée (28c, 29c) de chaque patte de collecte de courant (28, 29), dans une vue de côté, fait saillie au-delà de la surface inférieure (61a) de chaque collecteur de courant (60A, 60B) vers le boîtier (10).

6. Dispositif de stockage d'énergie (1) selon la revendication 1, dans lequel chaque patte de collecte de courant (28, 29) comprend une partie pliée qui, dans une vue de côté, fait saillie au-delà de la surface inférieure (61a) de chaque collecteur de courant (60A, 60B) vers le boîtier (10).

7. Dispositif de stockage d'énergie (1) selon la revendication 6, dans lequel chaque collecteur de courant (60A, 60B) a une partie d'échappement (66A, 66B) où la première partie pliée (28c, 29c) est disposée.
